(19) **Europäisches Patentamt / European Patent Office / Office européen des brevets**

(11) **EP 3 287 835 B1**

(12) # EUROPEAN PATENT SPECIFICATION

(45) Date of publication and mention
of the grant of the patent:
**13.03.2019 Bulletin 2019/11**

(21) Application number: **16783033.0**

(22) Date of filing: **08.04.2016**

(51) Int Cl.:
*G02B 27/02* (2006.01)     *G09G 3/20* (2006.01)
*G09G 3/34* (2006.01)     *H04N 5/64* (2006.01)

(86) International application number:
**PCT/JP2016/061543**

(87) International publication number:
**WO 2016/171012 (27.10.2016 Gazette 2016/43)**

(54) **IMAGE DISPLAY DEVICE AND HEAD MOUNTED DISPLAY**

BILDANZEIGEVORRICHTUNG UND AM KOPF MONTIERTE ANZEIGE

DISPOSITIF D'AFFICHAGE D'IMAGE ET VISIOCASQUE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **23.04.2015 JP 2015088183**

(43) Date of publication of application:
**28.02.2018 Bulletin 2018/09**

(73) Proprietor: **Konica Minolta, Inc.
Tokyo 100-7015 (JP)**

(72) Inventor: **INAGAKI Yoshihiro
Tokyo 100-7015 (JP)**

(74) Representative: **Gille Hrabal
Brucknerstrasse 20
40593 Düsseldorf (DE)**

(56) References cited:
**WO-A1-2010/061835    WO-A1-2011/155357
JP-A- 2012 013 908    JP-A- 2012 013 908
US-A1- 2011 194 163    US-A1- 2013 141 527**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**Description**

**Technical Field**

The present invention relates to an image display apparatus that permits an observer to observe as a virtual image an image displayed on a display element, and to a head-mounted display (hereinafter referred to also as an HMD) incorporating such an image display apparatus.

**Background Art**

There have conventionally been proposed various image display apparatuses that use a volume-phase hologram (HOE, holographic optical element) to permit an observer to observe an image (virtual image). For example, according to Patent Document 1 identified below, the image light emanating from a display element is totally reflected on two flat surfaces of an eyepiece prism disposed opposite from each other, and is then diffraction-reflected on a flat HOE so as to reach the observer's pupil. In the eyepiece prism, the surface (bonding surface) to which the HOE is bonded is disposed with an inclination relative to the two flat surfaces. By diffraction-reflecting the image light at an angle different from that of the regular reflection direction on the bonding surface, it is possible to reduce the inclination angle of the bonding surface relative to the two flat surfaces, thereby make the eyepiece prism slimmer, and thereby make the apparatus compact.

**List of Citations**

**Patent Literature**

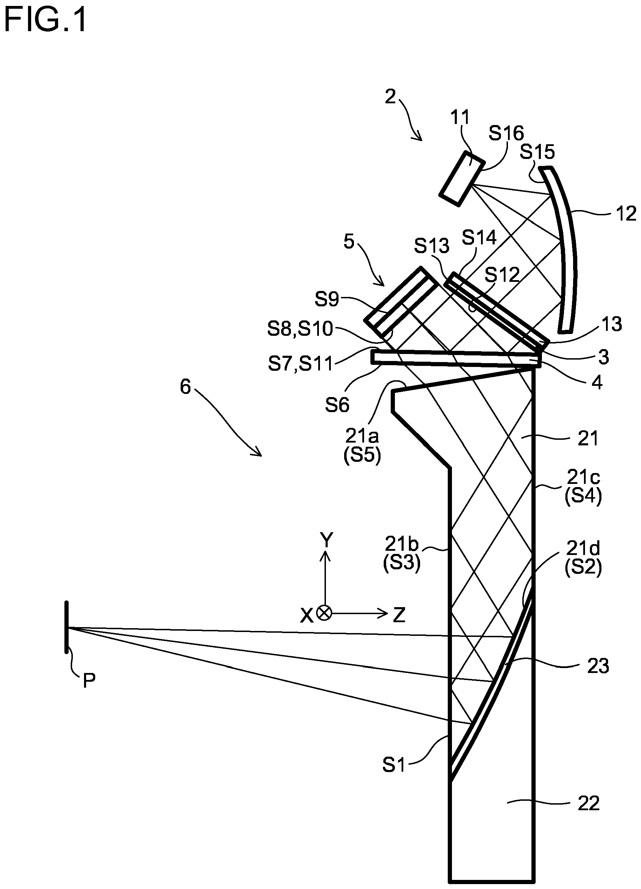

Patent Document 1: Japanese Patent Application published as No. 2001-264682 (see claim 1; paragraphs 0026 to 0029, 0074, and 0088; Figs. 1, 2, and 8; etc.)

**Summary of the Invention**

**Technical Problem**

Inconveniently, when the inclination angle of the bonding surface is changed while the HOE is left flat, compared with when, at the angle of field corresponding to the center of the image, the diffraction angle is set at an angle at which regular reflection occurs on the bonding surface, the optical path length from the display element to the HOE varies with the position on the image (display surface), and in addition the variation of the optical path length with the position on the image increases as the inclination angle of the bonding surface decreases. When a HOE is used, the diffraction direction can be determined without taking the shape of the bonding surface into consideration. However, in a case where, as mentioned above, the optical path length from the display element to the HOE varies with the position on the image, even when the HOE is designed so as to fulfill correction conditions for curvature of field around the principal ray corresponding to the center of the angle of field, the state at a position off the center of the angle of field is not always ideal. Moreover, in a case where the above-mentioned optical path length varies with the position on the image, the HOE has a weaker optical power at the side where the optical path length from the display element is longer (corresponding to, for example, the lower end of the angle of field) and a stronger optical power at the side where that is shorter (corresponding to, for example, the upper end of the angle of field), with the result that coma occurs. Accordingly, in reducing the inclination angle of the bonding surface and making the eyepiece prism slimmer, it is desirable to reduce coma while correcting curvature of field over the entire screen.

Devised to solve the problems mentioned above, the present invention aims to provide an image display apparatus that, despite having a slim eyepiece prism, can reduce coma while correcting curvature of field over the entire screen, and to provide an HMD incorporating such an image display apparatus.

**Means for Solving the Problem**

According to one aspect of the present invention, an image display apparatus includes: a display element which displays an image; and an eyepiece optical system through which the image light from the display element is directed to a pupil of an observer. Here, the eyepiece optical system includes: an eyepiece prism which guides the image light inside it; and a volume-phase holographic optical element which diffraction-reflects the image light guided inside the eyepiece prism. The eyepiece prism has: two mutually parallel flat surfaces; and a bonding surface which connects together the two flat surfaces and to which the holographic optical element is bonded. The image light is totally reflected at least once on each of the two flat surfaces and is then incident on the holographic optical element. The bonding surface is in a shape having a curvature only in one direction, and has a curvature in a sectional plane that includes the normal to the display element and the normals to the two parallel flat surfaces and that also includes the center of the display surface of the display element. In the sectional plane, the diffraction directions at which the light emanating from the center of the display surface and the light emanating from at least one point other than the center are diffraction-reflected on the holographic optical element are directions that produce non-zero angle differences at the same side with respect to the regular reflection directions of the respective light on the bonding surface.

According to another aspect of the present invention, a head-mounted display includes: an image display apparatus as described above; and a support member which supports the image display apparatus in front of an eye of the observer.

**Advantageous Effects of the Invention**

With an arrangement as described above, by giving the bonding surface of an eyepiece prism a shape having a curvature only in one direction, and setting the diffraction directions of the light emanating from different points on, including the center of, the display surface in the sectional plane in which the bonding surface has the curvature such that the diffraction directions produce angle differences at the same side with respect to the regular reflection directions, it is possible, with a slim eyepiece prism, to reduce coma while correcting curvature of field over the entire screen.

**Brief Description of Drawings**

Fig. 1 is a sectional view showing an outline of the construction of an image display apparatus according to one embodiment of the present invention;
Fig. 2 is a diagram illustrating the relationship between the diffraction direction of image light on a HOE and the regular reflection direction on a bonding surface in the above image display apparatus;
Fig. 3 is a diagram illustrating the regular reflection direction on the bonding surface as observed when the image light traveling toward the optical pupil is traced in the reverse direction;
Fig. 4 is a diagram illustrating how the image light passes through the bonding surface when the HOE is replaced with air;
Fig. 5A is a top view of an HMD incorporating the above image display apparatus;
Fig. 5B is a front view of the above HMD;
Fig. 5C is a bottom view of the above HMD;
Fig. 6 is a perspective view of the above HMD as seen from the front side;
Fig. 7 is a graph showing the curvature of field in the image display apparatus of a practical example;
Fig. 8 is a graph showing the curvature of field in the image display apparatus of a comparative example; and
Fig. 9 is a graph showing the coma in the image display apparatuses of the practical and comparative examples.

**Description of Embodiments**

An embodiment of the present invention will be described below with reference to the accompanying drawings. In the present description, any range of values from "a" to "b" is supposed to include the lower limit value "a" and the upper limit value "b". The scope of the present invention is in no way limited by what is disclosed herein.

(Image Display Device)

Fig. 1 is a sectional view showing an outline of the construction of an image display apparatus 1 according to one embodiment of the present invention. The image display apparatus 1 includes an illumination optical system 2, a polarizer plate 3, a polarizing beam splitter (PBS) 4, a display element 5, and an eyepiece optical system 6.

For the sake of convenience of description, different directions are defined as follows. The axis that optically connects between the center of the optical pupil P formed by the eyepiece optical system 6 and the center of the display surface of the display element 5 is, along with its extension line, taken as the center axis. Suppose that a ray of light coincident with the center axis is incident on a HOE 23. Then the plane that includes the incident ray of light and the reflected ray of light is referred to as the center axis plane. The direction perpendicular to the center axis plane of the HOE 23 in the eyepiece optical system 6 is defined as the X direction. At the point of intersection between any optical member and the center axis, in the plane perpendicular to the surface normal, the direction perpendicular to the X direction is defined as the Y direction. The direction perpendicular to both the X and Y directions is defined as the Z direction. With these definitions, the sectional plane that includes the normal to the display element 5 and the normals to two parallel surfaces 21b and 21c, which will be described later, of the eyepiece optical system 6 and that also includes the center of the display surface of the display element 5 is the YZ sectional plane.

The illumination optical system 2 serves to illuminate the display element 5, and includes a light source 11, an illumination mirror 12, and a diffuser plate 13.

The light source 11 comprises an RGB integrated LED that emits light corresponding to different colors, namely R (red), G (green), and B (blue). The plurality of light emission points (corresponding to R, G, and B respectively) are arrayed along a substantially straight line in the horizontal direction (X direction). The light emitted from the light source 11 has, for example, wavelengths of $462\pm12$ nm (B light), $525\pm17$ nm (G light), and $635\pm11$ nm (R light) in terms of the light intensity peak wavelength combined with the half-maximum light intensity wavelength width. The light source 11 may be a laser light source.

In this embodiment, the light source 11 includes two RGB integrated LEDs. The light emission points are arrayed along a substantially straight line such that the R, G, and B light emission points are located symmetrically with respect to the center axis plane of the HOE 23 (they are arrayed, for example, in the order BGRRGB in the X direction). This helps make the RGB light intensity distribution in the X direction symmetrical.

The illumination mirror 12 is an optical element that reflects the light (illumination light) emitted from the light source 11 toward the diffuser plate 13 and simultaneously deflects the illumination light such that the optical pupil P and the light source 11 are substantially conjugate with each other with respect to the Y direction.

The diffuser plate 13 is a unidirectional diffuser plate that diffuses the incident light at, for example, 45° in the X direction, that is, in the direction in which the plurality of light emission points is arrayed in the light source 11, but that does not diffuse the incident light in the Y direction. The diffuser plate 13 is held on the surface of the polarizer plate 3.

The polarizer plate 3 transmits, out of the light incident through the diffuser plate 13, light of a predetermined polarization direction to direct it to the PBS 4.

The PBS 4 is a polarizing splitting element in the shape of a flat plate that, on one hand, reflects the light transmitted through the polarizer plate 3 toward the display element 5, which is of a reflective type, and that, on the other hand, transmits, out of the light reflected from the display element 5, the light corresponding to an ON image signal (the light of which the polarization direction is perpendicular to that of the light transmitted through the polarizer plate 3), and is disposed near a light incidence surface (surface 21a), which will be described later, of an eyepiece prism 21 in the eyepiece optical system 6.

The display element 5 is a display element that modulates the light from the illumination optical system 2 to display an image, and in this embodiment comprises a reflective liquid crystal display element. The display element 5 may be configured to include a color filter, or may be configured to be driven on a time-division basis such that, in a manner synchronized with time-divided RGB light emission of the light source 11, whichever of R, G, and B images corresponds to the color of the light being emitted is displayed.

The display element 5 is disposed such that the light incident approximately perpendicularly from the PBS 4 is reflected approximately perpendicularly by the display element 5 so as to be directed toward the PBS 4. Thus, compared with an arrangement where light is made incident on a reflective display element at a large angle of incidence, it is easier to work out optical designs with higher resolutions. The display element 5 has a rectangular display surface, and is disposed with the long and short sides of the display surface aligned with the X and Y directions respectively.

The display element 5 is disposed at the same side as the light source 11 with respect to the optical path leading from the illumination mirror 12 to the PBS 4. This helps achieve a compact design of the entire optical system from the illumination optical system 2 to the display element 5.

The eyepiece optical system 6 is an optical system for directing the image light from the display element 5 to an observer's pupil (optical pupil P), and has a non-axisymmetric (non-rotation-symmetric) positive optical power. The eyepiece optical system 6 includes an eyepiece prism 21, a deflecting prism 22, and a HOE 23.

The eyepiece prism 21, on one hand, guides inside it the image light incident from the display element 5 through the PBS 4 and, on the other hand, transmits the light of an outside-world image (outside light). The eyepiece prism 21 is in the shape of a plane-parallel plate of which an upper end part is made increasingly thick toward the upper end and of which a lower end part is made increasingly thin toward the lower end.

The eyepiece prism 21 has surfaces 21a to 21d. The surface 21a is a light incidence surface on which the image light is incident from the display element 5 through the PBS 4. The surfaces 21b and 21c are two parallel surfaces disposed opposite from each other approximately parallel to the optical pupil P, and are total-reflection surfaces that guide the image light by totally reflecting it. Of the two surfaces, the one at the optical pupil P side, that is, the surface 21b, doubles as an emergence surface from which the image light diffraction-reflected from the HOE 23 emerges. The surface 21d is a bonding surface which connects together the surfaces 21b and 21c and to which the HOE 23 is bonded. Connecting together the surfaces 21b and 21c, the surface 21d is not parallel to the surfaces 21b and 21c (it is inclined relative to the surfaces 21b and 21c).

The eyepiece prism 21 is bonded with adhesive to the deflecting prism 22 such that the HOE 23, which is disposed in a lower end part of the eyepiece prism 21, is held in between. In this embodiment, of the surfaces constituting the eyepiece prism 21, all the surfaces (the light incidence surface 21a and the surfaces 21b and 21d) that the image light passes through are, except the surface 21d to which the HOE 23 is bonded, flat surfaces. In the eyepiece prism 21, the surface 21d to which the HOE 23 is bonded is a curved surface that has a curvature only in the Y direction, and thus has a curvature only in the YZ sectional plane.

The deflecting prism 22, bonded to the eyepiece prism 21 with the HOE 23 in between, constitutes a substantially plane-parallel plate. Bonding together the deflecting prism 22 and the eyepiece prism 21 helps cancel the refraction that occurs when the outside light passes through the wedge-shaped lower end part of the eyepiece prism 21, and thus helps prevent distortion in the outside-world image observed.

The HOE 23 is a volume-phase reflection hologram that is disposed in contact with the eyepiece prism 21 and that diffraction-reflects the image light guided inside the eyepiece prism 21. The HOE 23 diffracts (reflects) light in three wavelength ranges of, for example, $465 \pm 5$ nm (B light), $521 \pm 5$ nm (G light), and $634 \pm 5$ nm (R light) in terms of the diffraction efficiency peak wavelength combined with the half-maximum diffraction efficiency wavelength width. That is, the RGB diffraction wavelengths of the HOE 23 approximately correspond to the wavelengths of the RGB image light (the light emission wavelengths of the light source 11).

In the arrangement described above, the light emitted from the light source 11 in the illumination optical system 2 is reflected by the illumination mirror 12, and is then diffused by the diffuser plate 13 only in the X direction; then only light of a predetermined polarization direction is transmitted through the polarizer plate 3. The light transmitted through the polarizer plate 3 is reflected by the PBS 4 so as to be incident on the display element 5.

In the display element 5, the incident light is modulated according to an image signal. Here, the image light that corresponds to an ON image signal emerges from the display element 5 after being converted to light of which the polarization direction is perpendicular to that of the incident light; it is thus transmitted through the PBS 4 so as to enter the eyepiece prism 21 through the surface 21a. On the other hand, the image light that corresponds to an OFF image signal emerges from the display element 5 without having its polarization direction changed; it is thus intercepted by the PBS 4 so as not enter the eyepiece prism 21.

In the eyepiece prism 21, the incident image light is totally reflected at least once on each of the two surfaces 21c and 21b of the eyepiece prism 21 disposed opposite from each other, and is then incident on the HOE 23, where the light is diffraction-reflected so as to emerge from the surface 21b and reach the optical pupil P. Thus, at the position of the optical pupil P, the observer can observe as a virtual image the image displayed on the display element 5.

On the other hand, the eyepiece prism 21, the deflecting prism 22, and the HOE 23 transmit almost all the outside light, and this permits the observer to observe an outside-world image in a see-through fashion. Thus, the virtual image of the image displayed on the display element 5 is observed in a form overlaid on part of the outside-world image.

(Shape of the Bonding Surface and Design of the HOE)

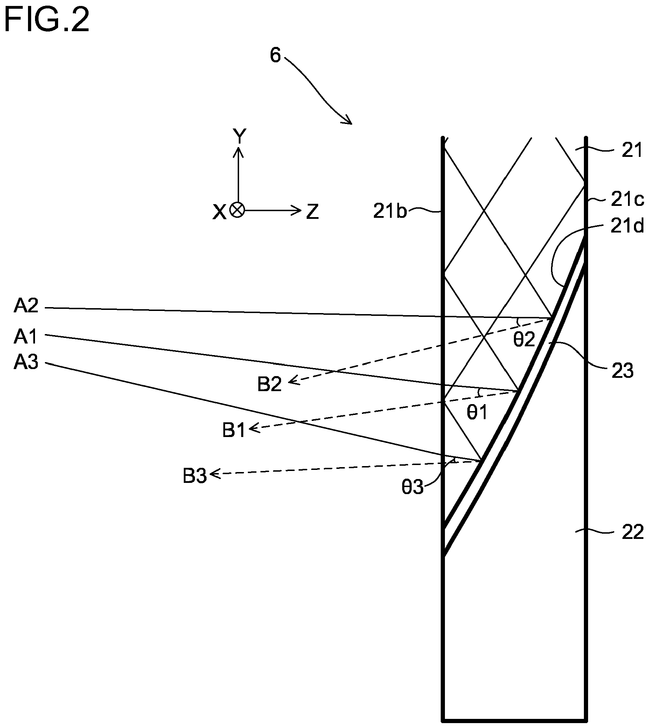

Fig. 2 shows, in the YZ sectional plane, the relationship between the diffraction direction in which the image light from the display element 5 is diffraction-reflected on the HOE 23 and the regular reflection direction of the image light on the surface 21d. The diagram shows the optical paths of, out of the image light from the display element 5, the principal rays (central rays of beams) of the image light emanating from the center of the display surface (the position corresponding to the center of the angle of field), from the position on the display surface corresponding to the upper end of the angle of field, and from the position on the display surface corresponding to the lower end of the angle of field. The image light emanating from the center of the display surface, from the position on the display surface corresponding to the upper end of the angle of field, and from the position on the display surface corresponding to the lower end of the angle of field and the corresponding diffracted light are indicated by solid lines A1, A2, and A3 respectively, and the regular reflection directions of the respective image light on the surface 21d are indicated by broken lines B1, B2, and B3 respectively.

In this embodiment, in the YZ sectional plane, the diffraction direction in which the light emanating from the center of the display surface is diffraction-reflected on the HOE 23 is a direction that produces a non-zero angle difference $\theta 1$ with respect to the regular reflection direction on the surface 21d (see solid line A1 and broken line B1). On the other hand, the diffraction directions in which the light emanating from points other than the center of the display surface is diffraction-reflected on the HOE 23 are directions that produce non-zero angle differences $\theta 2$ and $\theta 3$ relative to the regular reflection direction on the surface 21d (see solid lines A2 and A3 and broken lines B2 and B3). Moreover, these angle differences $\theta 1$ to $\theta 3$ are produced at the same side with respect to the regular reflection directions of the respective image light on the surface 21d (here, at the side where the image light is incident on the HOE 23). In other words, for any light, irrespective of from the center of or other points on the display surface, the diffraction angle (the angle relative to the surface normal) at the position where it is incident on the HOE 23 is smaller than the regular reflection angle (the angle relative to the surface normal) at the position where it is incident on the surface 21d. The difference between the regular reflection angle and the diffraction angle is each of the above-mentioned angle differences $\theta 1$ to $\theta 3$. The values

of the angle differences θ1 to θ3 differ from each other.

It should be noted that, not only for the image light illustrated in Fig. 2, but for the image light emanating from any point on the display surface, the diffraction direction on the HOE 23 is a direction that, as described above, produces a non-zero angle difference with respect to the regular reflection direction on the surface 21d. And this angle difference is produced at the same side (at the side where the image light is incident on the HOE 23) with respect to the regular reflection direction on the surface 21d as the side where an angle difference is produced for other image light.

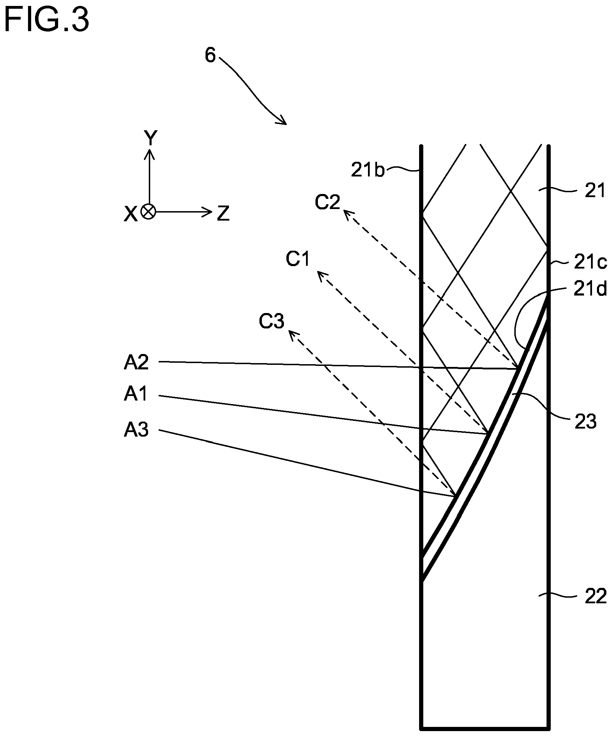

Fig. 3 shows the regular reflection direction on the surface 21d as observed when the image light traveling toward the optical pupil P is traced in the reverse direction from the optical pupil P side. The regular reflection directions on the surface 21d as observed when the light indicated by solid lines A1 to A3 are traced in the reverse direction are indicated by broken lines C1 to C3 respectively. As mentioned above, the surface 21d is given a shape having a curvature only in one direction, and has a curvature in the plane parallel to the YZ sectional plane (center axis plane). That is, the line of intersection between the surface 21d and any plane parallel to the XZ plane and the line of intersection between the surface 21d and any plane parallel to the XY plane are both straight lines. Different light traced in the reverse direction from the optical pupil P have angle differences corresponding to the angles of field relative to reference light (for example, the light at the center of the angle of field); by contrast, the regular reflection directions (see broken lines C1 to C3) are close to parallel to each other, revealing the degree of the optical power of the surface 21d.

By adopting, as in this embodiment, an arrangement where, in the YZ sectional plane, the diffraction direction of the light emanating from the center of the display surface (the image light at the center of the angle of field) is deviated by an angle difference of θ1 from the regular reflection direction and in addition the diffraction directions of the light emanating from points other than the center of the display surface (the image light from other than the center of the angle of field) are deviated by angle differences of θ2 and θ3 from the regular reflection directions at the same side as the side where the image light at the center of the angle of field is diffracted, it is possible to incline the surface 21d such that it is closer to parallel to the two flat surfaces (surfaces 21b and 21c), and thereby to make the eyepiece prism 21 slimmer. This effect of making the eyepiece prism 21 slimmer is achieved by setting, at least for the light emanating from the center of the display surface and the light emanating from one point other than the center of the display surface, the diffraction directions such that angle differences are produced at the same side with respect to the regular reflection directions. By setting, for all the light emanating from the display surface, the diffraction directions such that angle differences are produced as described above, it is possible to surely achieve the effect of making the eyepiece prism 21 slimmer.

Owing to the surface 21d being given a curvature only in the YZ sectional plane and the diffraction direction of the image light at the center of the angle of field being deviated (by an angle difference of θ1) from the regular reflection direction, compared with an arrangement where the HOE bonding surface is a flat surface or an arrangement where the diffraction direction of the image light at the center of the angle of field coincides with the regular reflection direction, it is possible, even when the eyepiece prism 21 is made slimmer, to suppress an increase in the variation, with the position on the image (display surface), of the optical path length from the display element 5 to HOE 23. This makes it possible to work out designs that can correct curvature of field not only at the center of the angle of field but also at positions away from it. Since making the eyepiece prism 21 slimmer helps suppress an increase in the position-related variation of the above-mentioned optical path length, it is possible to suppress an increase in the difference in the optical power of the HOE 23 between the sides with the longer and shorter optical path lengths. It is thus possible to reduce the coma resulting from the just-mentioned difference in the optical power. That is, it is possible, with a slim eyepiece prism 21, to reduce coma while correcting curvature of filed over the entire screen.

The above-mentioned angle differences (for example, θ1 to θ3) are produced, with respect to the regular reflection directions on the surface 21d, at the side where the image light is incident on the HOE 23. By producing angle differences in this way, it is possible, with a slim arrangement, to surely achieve the above-mentioned effect of correcting curvature of filed and coma.

Giving the surface 21d curvatures in two directions, for example in the X and Y directions, makes it difficult to bond a sheet-form hologram photosensitive material on the surface 21d, and makes it difficult to produce the HOE 23 by use of the sheet-form hologram photosensitive material. By contrast, in this embodiment, owing to the surface 21d having a curvature only on the sectional plane parallel to the center axis plane (only in one direction, namely the Y direction), it is easy to bond a sheet-form hologram photosensitive material on the surface 21d, and to produce the HOE 23 by exposing the bonded hologram photosensitive material.

The HOE 23 in the eyepiece optical system 6 has wavelength selectivity, and diffraction-reflects only light in a predetermined wavelength range. Thus, if as the display element 5 a self-luminous type such as an organic EL (electroluminescence) display device with broad light emission characteristics is used, part of the image light is not diffraction-reflected, resulting in lower light use efficiency. In this respect, in this embodiment, as the display element 5, a display element such as an LCD that displays an image by modulating light from the illumination optical system 2 is used, and this makes it possible to build an apparatus by using as the illumination optical system 2 a light source such as an LED or a laser light source, that is, a light source that emits light in wavelength ranges with narrow half-maximum wavelength widths that approximately coincide with the diffraction wavelength ranges of the HOE 23. It is thus possible to diffract the image light from the display element 5 efficiently with the HOE 23, and to achieve improved light use efficiency.

(Setting the Inclination and the Shape of the Bonding Surface with Consideration Given to the Total Reflection Condition during Exposure)

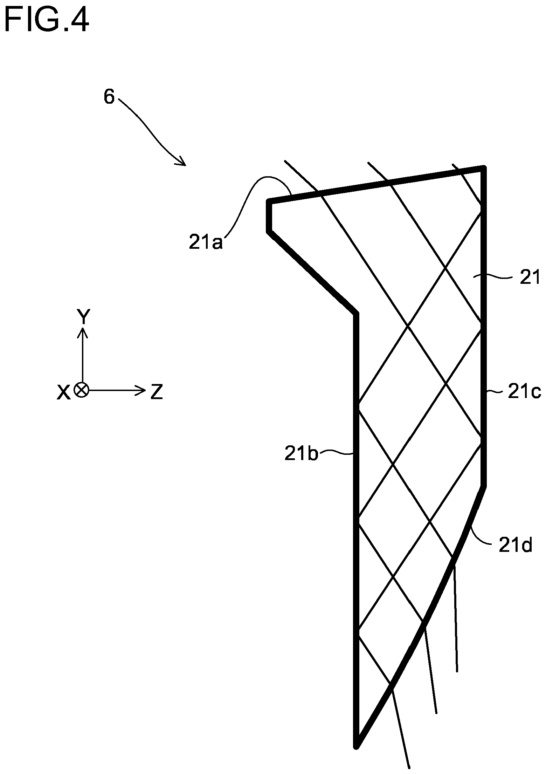

Fig. 4 schematically shows how the image light from the display element 5 passes through the surface 21d when the HOE 23 is replaced with air. The diagram only shows the principal rays of the image light at the center of the angle of field and the principal rays of the image light corresponding to the upper and lower ends, respectively, of the angle of field. The principal rays of all the image light have optical paths that pass through the surface 21d, and it can be seen that the total reflection conditions is not fulfilled. In this embodiment, the inclination angle and the curvature (the degree of curvature) of the surface 21d are set such that, not only for the rays that are illustrated, but for any ray in the entire range of the angle of field in the YZ plane, the total reflection condition is not fulfilled. The reasons will be described below.

To produce a reflection HOE 23 requires irradiating a hologram photosensitive material, from both sides of it, with two light beams such that these interfere with each other. At this time, one of the two light beams needs to be shone, with respect to the optical path for image observation, in the reverse direction from the extension line having passed through the HOE 23. For example, in a case where one light beam is shone on the hologram photosensitive material through the eyepiece prism 21 from the optical pupil P side, the other light beam needs to be shone on the hologram photosensitive material from the side of the HOE 23 opposite from the side where the image light is incident.

Here, suppose that the HOE 23 is produced with one surface of the hologram photosensitive material bonded to the eyepiece prism 21 and the other surface left open (in contact with air). Then, if on the surface 21d of the eyepiece prism 21 the image light fulfills the total reflection condition, since the eyepiece prism 21 and the hologram photosensitive material are selected to have close refractive indices, total reflection occurs also on the emergence surface of the hologram photosensitive material, and thus the above-mentioned extension line (the optical path along which the image light passes through the HOE 23) no longer exists. That is, in this case, it is impossible to produce the HOE 23 by exposing the hologram photosensitive material from the side opposite from the side where the image light is incident.

Thus, it is necessary to produce the HOE 23 by making the optical path of one light beam coincident with the optical path of the image light and shining the other light beam on the hologram photosensitive material from the extension line at the side of the HOE 23 opposite from the side where diffracted light is produced. However, even in that case, if the image light fulfills the total reflection condition, the light at the side where the optical path is made coincident with that of the image light is totally reflected on the incidence surface of the hologram photosensitive material, and interferes with itself to produce a hologram. This hologram has optical characteristics different from those of the hologram that is expected to be produced, and causes strong ghosts.

By contrast, by exposing the hologram photosensitive material with it held between the eyepiece prism 21 and another prism from both sides, it is possible, without giving consideration to the above-mentioned total reflection condition, to produce the HOE 23. However, in an arrangement where, as in this embodiment, the surface 21d of the eyepiece prism 21 to which the HOE 23 is bonded is curved in the YZ sectional plane, the surface of the prism located at the side of the hologram photosensitive material opposite from the eyepiece prism 21 has to be curved accurately to fit the surface 21d, and this makes it difficult to keep the above-mentioned prism in close contact with the hologram photosensitive material with no gap. One solution is to keep the above-mentioned prism in close contact with the hologram photosensitive material via emulsion oil; however, this requires the emulsion oil to be wiped off cleanly after the production of the HOE 23, which is troublesome and is thus undesirable.

Accordingly, by setting the inclination angle and the curvature of the surface 21d such that, when the HOE 23 is replaced with air, the image light from the display element 5 is transmitted to the air side without being totally reflected on the surface 21d of the eyepiece prism 21, it is possible, during the production of the HOE 23, to produce the HOE 23 with air at one side of the hologram photosensitive material (the side opposite from the eyepiece prism 21), that is, with no other prism in close contact with the hologram photosensitive material and in addition without producing a hologram that causes a ghost, and this makes it easy to produce the HOE 23. It is then not necessary to use another prism, eliminating the need for emulsion oil for keeping the other prism in close contact with the hologram photosensitive material, and thereby eliminating the need for a step for wiping it off.

In this embodiment, an arrangement is adopted where, when the HOE 23 is replaced with air, all the image light from the display element 5 is transmitted to the air side without being totally reflected on the surface 21d of the eyepiece prism 21. Instead, an arrangement is also possible where at least in the effective region of the HOE 23, that is, its region where it diffracts the image light toward the optical pupil P, the image light is transmitted without being totally reflected. Thus, it can be said that it is possible to obtain the above-mentioned effect with an arrangement where, when the HOE 23 is replaced with air, at least part of the image light from the display element 5 is transmitted to the air side without being totally reflected on the surface 21d.

In the air at one side of the hologram photosensitive material, an optical member (for example, a color correction prism) for color correction of the image light may be disposed with no contact with the hologram photosensitive material so that the hologram photosensitive material is exposed through that optical member.

(HMD)

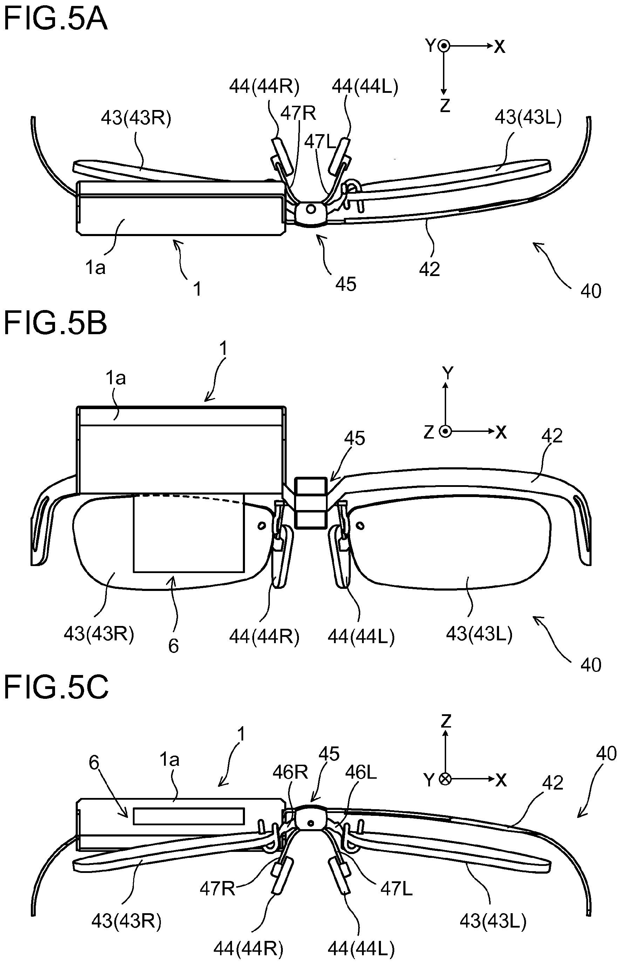

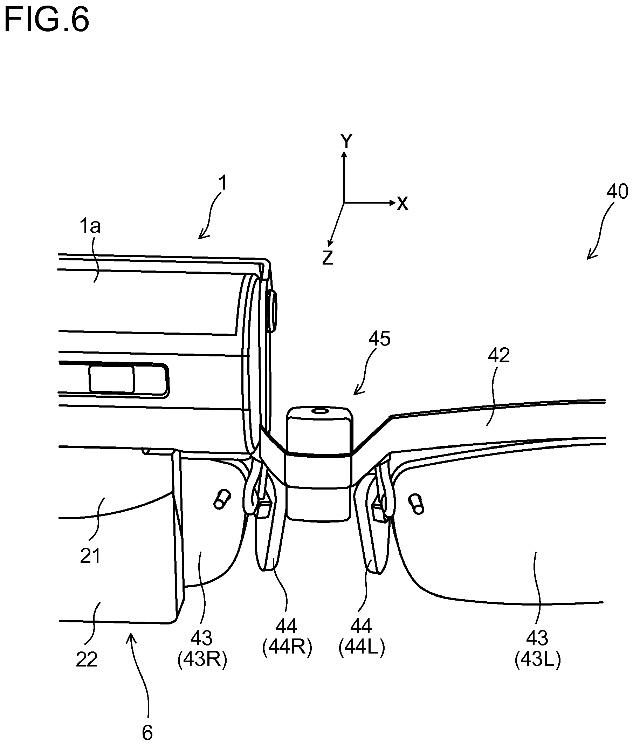

Next, an HMD as an application example of the image display apparatus according to the embodiment will be described. Figs. 5A, 5B, and 5C are a top view, a front view, and a bottom view, respectively, of the HMD 40 according to this embodiment, and Fig. 6 is a perspective view of the HMD 40 as seen from the front side. The HMD 40 includes the image display apparatus 1 described above, a frame 42, a lens 43, a nose pad 44, and a position adjusting mechanism 45.

The image display apparatus 1 has the above-described illumination optical system 2, polarizer plate 3, PBS 4, and display element 5 housed in a housing 1a, and an upper end part of the eyepiece optical system 6 is located inside the housing 1a. The eyepiece optical system 6 is built by bonding together the eyepiece prism 21 and the deflecting prism 22, and is located in front of a right-eye lens 43R (at the outside-world side, opposite from the observer). The light source 11 and the display element 5 in the housing 1a are connected to an unillustrated circuit board via a cable (unillustrated) that penetrates the housing 1a, so that the light source 11 and the display element 5 are fed with driving electric power and an image signal from the circuit board.

The image display apparatus 1 may further include an imaging device for shooting still and moving images, a microphone, a loudspeaker, an earphone, and the like and be configured to exchange (transmit and receive) information on shot images and display images and information on sounds with an external server or terminal via a communication network such as the Internet.

The frame 42 is a support member that is worn on an observer's head and that supports the image display apparatus 1 in front of the observer's eye. The frame 42 includes a temple that abuts on left and right side parts of the observer's head.

The lens 43 includes a right-eye lens 43R and a left-eye lens 43L that are disposed in front of the observer's right and left eyes respectively. The right-eye and left-eye lenses 43R and 43L are coupled to the position adjusting mechanism 45 via a right coupler 46R and a left coupler 46L. The right-eye and left-eye lenses 43R and 43L may be lenses for vison correction, or may be dummy lenses with no function of vision correction.

The nose pad 44 includes a right nose pad 44R and a left nose pad 44L that abut on the observer's nose. The right and left nose pads 44R and 44L are coupled to the position adjusting mechanism 45 via a right coupler 47R and a left coupler 47L.

The position adjusting mechanism 45 is a mechanism that permits the nose pad 44 to move in the up-down direction perpendicular to the observer's interpupillary distance direction relative to the frame 42 to permit adjustment of the position, in the up-down direction, of the image display apparatus 1 supported on the frame 42. The position adjusting mechanism 45 may be omitted, in which case the lens 43 and the nose pad 44 can be fixed directly to the frame 42.

When the HMD 40 is worn on the observer's head and an image is displayed on the display element 5, its image light is directed through the eyepiece optical system 6 to the optical pupil. Thus, when the observer's eye is adjusted to the position of the optical pupil, the observer can observe an enlarged virtual image of the image displayed on the image display apparatus 1. Simultaneously, the observer can observe the outside-world image through the eyepiece optical system 6 in a see-through fashion.

As described above, owing to the image display apparatus 1 being supported on the frame 42 as a support member, the observer can observe the image presented by the image display apparatus 1 stably for a long time on a hands-free basis.

In Fig. 5A, etc., the eyepiece optical system 6 and the lens 43 in the image display apparatus 1 are configured as separate components. Instead, the eyepiece optical system 6 and the lens 43 may be configured unitarily. Two image display apparatuses 1 may be used so that an image can be observed with both eyes.

(Practical Example)

Numerical examples of the image display apparatus 1 shown in Fig. 1 will now be presented more specifically with reference to their construction data and other data.

Table 1 shows the construction data and other data of an image display apparatus 1 of a practical example. In the surface data shown in Table 1, Si (i = 1, 2, 3, ...) refers to the i-th surface counted from the optical pupil P side along the optical path from the light source 11 to the optical pupil P, and the surface data comprises data on how the surface Si is disposed.

In the practical example, S1 is the image light emergence surface of the eyepiece prism 21; S2 is the surface 21d (the HOE bonding surface) of the eyepiece prism 21; S3 is the surface 21b (a total reflection surface (identical with S1)); S4 is the surface 21c (a total reflection surface); S5 is the surface 21a (the image light incidence surface of the eyepiece prism 21); S6 is the emergence surface of the PBS 4; S7 is the incidence surface of the PBS 4; S8 is the cover glass surface of the display element 5; S9 is the liquid crystal surface of the display element 5; S10 is the cover glass surface of the display element 5; S11 is the reflection surface of the PBS 4; S12 is the emergence surface of the polarizer plate 3; S13 is the boundary surface between the polarizer plate 3 and the diffuser plate 13; S14 is the incidence surface of the diffuser plate 13; S15 is the reflection surface of the illumination mirror 12; and S16 is the LED light emission surface of the light source 11.

The disposition of each surface Si is defined by surface data comprising reference point coordinates (x, y, z) and a rotation angle (ADE) in its surface data. The reference point coordinates of a surface Si are given, with its reference point taken as the origin of a rectangular coordinate system (X, Y, Z), as the coordinates (x, y, z) (in mm) of the origin of the local rectangular coordinate system (X, Y, Z) in the global rectangular coordinate system (x, y, z), and the inclination of the surface Si is given as the rotation angle ADE (in degrees) about the X axis with the reference point at the center. The counter-clockwise rotation direction with respect to the positive direction of the Z axis is the positive direction of the rotation angle of X rotation. However, all coordinate systems are defined in the right-hand system, and the global rectangular coordinate system (x, y, z) is an absolute coordinate system that coincides with the local rectangular coordinate system (X, Y, Z) of the emergence surface S1. Accordingly, the X and Y directions are the coordinate axis directions in the rectangular coordinate system (X, Y, Z) that has as its origin the reference point of the surface Si and that has as the Z axis the normal at the reference point. In Fig. 1, the X direction is perpendicular to the plane of the figure (the left-right direction of the angle of field), and the Y direction is the up-down direction in the plane of figure (the up-down direction of the angle of field).

The reference wavelength of a HOE, that is, both the production wavelength (normalized wavelength) and the reproduction wavelength at the time of the production of the HOE, is 532 nm, and the diffracted light used is of order 1. A surface Si (HOE surface) that has a diffractive structure of a HOE is defined by formula (DS) below using the local rectangular coordinate system (X, Y, Z) having as its origin the reference point of the surface Si. As will be seen from formula (DS), the phase function $\varphi$ is a generating polynomial (dual polynomial) with respect to the position (X, Y) of the HOE, and the diffraction surface data in Table 2 shows the phase coefficients A(j, k) for different orders of X and different orders of Y (orders of X in the first row, orders of Y in the first column). In the diffraction surface data, the coefficient of any term that does not appear equals zero, and for all the data, E-n stands for $\times 10^{-n}$.

$$\varphi = \Sigma\Sigma\{A(j, k) \cdot X^j \cdot Y^k\} \qquad\qquad (DS)$$

where

$\varphi$      represents the phase function; and
A(j, k)      represents the phase coefficient (HOE coefficient) of order j for X and order k for Y.

In the free-form curved surface data shown in Tables 3 and 4, a surface Si which is a free-form curved surface (XY polynomial surface) is defined by formula (FS) below using the local rectangular coordinate system (X, Y, Z) having as its origin the reference point of the surface Si (no part representing a spherical surface term exists). The free-form curved surface data shown in Tables 3 and 4 shows the free-form curved surface coefficients B(j, k) for different orders of X and different orders of Y (orders of X in the first row, orders of Y in the first column). In the free-form curved surface data, the coefficient of any term that does not appear equals zero, and for all the data, E-n stands for $\times 10^{-n}$.

$$Z = \Sigma\Sigma\{B(j, k) \cdot X^j \cdot Y^k\} \qquad\qquad (FS)$$

where

Z      represents the amount of sag (mm) in the Z direction (center axis direction) at the coordinates (X, Y); and
B(j, k)      represents the polynomial free-form curved surface coefficient of order j for X and order k for Y.

[Table 1]

| Surface | | x | y | z | ADE(°) |
|---|---|---|---|---|---|
| <Coordinates> | | | | | |
| S16 | LED Equivalent Surface (LED Light Emission Surface) | 0 | 29.74 | 1.27 | 133.79 |
| S15 | Illumination Mirror Reflection Surface | 0 | 24.73 | 6.81 | 1.29 |
| S14 | Diffuser Plate | 0 | 21.82 | 2.75 | 53.79 |
| S13 | Polarizer-Diffuser Boundary Surface | 0 | 21.61 | 2.60 | 53.79 |
| S12 | Polarizer Plate | 0 | 21.53 | 2.54 | 53.79 |
| S11 | PBS Reflection Surface | 0 | 19.46 | 0.38 | -91.21 |
| S10 | Liquid Crystal Top Glass Incidence Surface | 0 | 22.04 | -2.43 | -46.21 |
| S9 | Liquid Crystal Surface | 0 | 22.54 | -2.91 | 133.79 |
| S8 | Liquid Crystal Top Glass Emergence Surface | 0 | 22.04 | -2.43 | 133.79 |
| S7 | PBS Incidence Surface | 0 | 19.46 | 0.38 | 88.79 |
| S6 | PBS Emergence Surface | 0 | 18.76 | 0.36 | 88.79 |
| S5 | Prism Incidence Surface | 0 | 17.91 | 1.21 | 99.41 |
| S4 | Total Reflection Surface | 0 | 11.50 | 5.00 | 0.00 |
| S3 | Total Reflection Surface (Identical with Emergence Surface) | 0 | 4.00 | 0.00 | 180.00 |
| S2 | HOE Bonding Surface | 0 | -0.56 | 2.64 | -25.00 |
| S1 | Emergence Surface | 0 | 0.00 | 0.00 | 0.00 |

[Table 2]

| Y\X | 0 | 2 | 4 | 6 | 8 | 10 |
|---|---|---|---|---|---|---|
| <HOE Coefficients> | | | | | | |
| 0 | 0.0000E+00 | -2.4618E-02 | -6.7650E-07 | 1.3965E-08 | -1.3455E-10 | 5.2999E-13 |
| 1 | 3.1920E-01 | -6.6904E-05 | -1.6037E-07 | 1.8424E-09 | -6.6046E-12 | 0.0000E+00 |
| 2 | 5.8227E-03 | -5.8557E-06 | 5.3113E-08 | -4.4203E-10 | 1.3624E-12 | 0.0000E+00 |
| 3 | 1.1651E-04 | -1.5407E-08 | 1.2823E-09 | -1.8721E-11 | 0.0000E+00 | 0.0000E+00 |
| 4 | -8.0938E-07 | 7.6191E-09 | -6.7195E-10 | 6.3501E-12 | 0.0000E+00 | 0.0000E+00 |
| 5 | -5.3915E-07 | -2.0602E-09 | 3.1379E-12 | 0.0000E+00 | 0.0000E+00 | 0.0000E+00 |
| 6 | -3.3518E-08 | 1.9666E-10 | -1.2735E-12 | 0.0000E+00 | 0.0000E+00 | 0.0000E+00 |
| 7 | 3.4347E-08 | 6.4026E-11 | 0.0000E+00 | 0.0000E+00 | 0.0000E+00 | 0.0000E+00 |
| 8 | 6.0851E-10 | -7.4589E-12 | 0.0000E+00 | 0.0000E+00 | 0.0000E+00 | 0.0000E+00 |
| 9 | -8.1405E-10 | 0.0000E+00 | 0.0000E+00 | 0.0000E+00 | 0.0000E+00 | 0.0000E+00 |
| 10 | 1.7071E-11 | 0.0000E+00 | 0.0000E+00 | 0.0000E+00 | 0.0000E+00 | 0.0000E+00 |

[Table 3]

| <HOE Surface Shape Formula Coefficient | |
|---|---|
| Y\X | 0 |
| 2 | -8.0000E-03 |

[Table 4]

| <Illumination Mirror Shape Formula Coefficients> | | |
|---|---|---|
| Y\X | 0 | 2 |
| 0 | 0.0000E+00 | -3.3446E-03 |
| 2 | -2.4642E-02 | 0.0000E+00 |
| 3 | -1.1641E-03 | 0.0000E+00 |
| 4 | -1.1266E-04 | 0.0000E+00 |

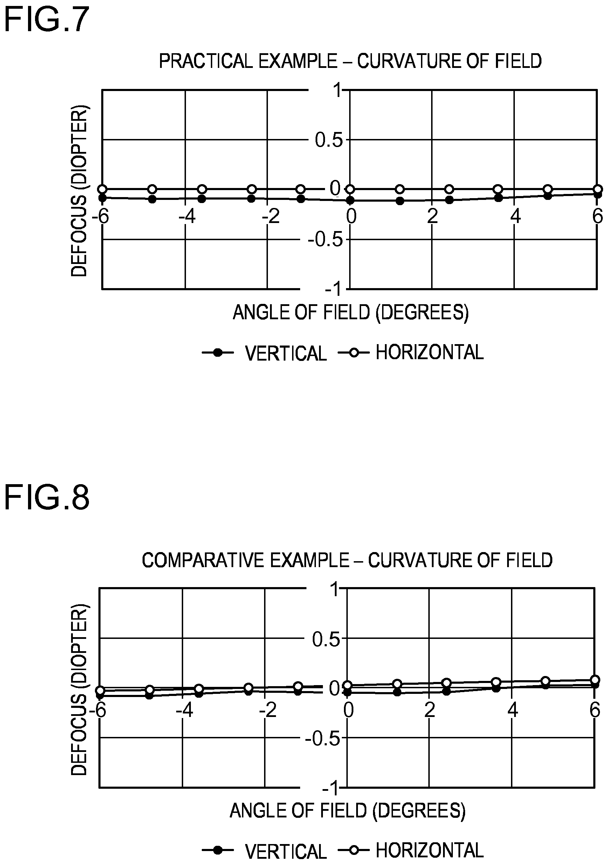

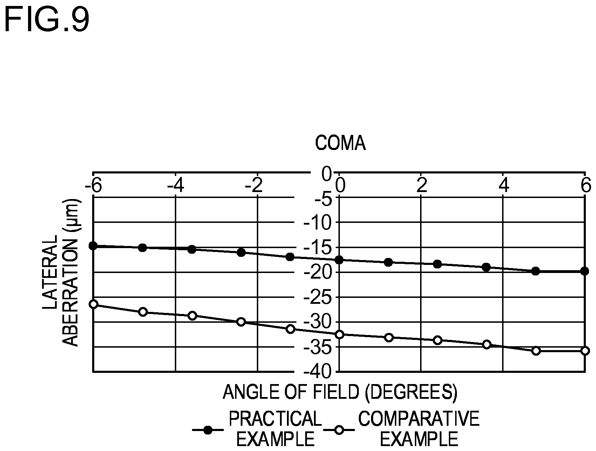

For comparison with the practical example, a comparative example is considered in which the surface 21d (HOE bonding surface) to which the HOE 23 is bonded has the same inclination (as in the practical example) but has no curve (a curvature of zero). Fig. 7 shows the curvature of field in the image display apparatus of the practical example, and Fig. 8 shows the curvature of field in the image display apparatus of the comparative example. In Figs. 7 and 8, the vertical axis represents the amount of defocus (diopter), and the horizontal axis represents the angle of field (degrees). Fig. 9 shows coma in the image display apparatuses of the practical and comparative examples. In Fig. 9, the vertical axis represents the amount of lateral aberration ($\mu$m), and the horizontal axis represents the angle of field (degrees) in the up-down direction.

It can be seen that, irrespective of whether the HOE bonding surface is curved as in the practical example or not curved as in the comparative example, curvature of field can be corrected up to similar degrees but that coma is reduced more in the practical example, indicating a notable effect of curving the HOE bonding surface.

The image display apparatus and the head-mounted display of the embodiment described above can be said to be configured as follows.

According to the embodiment, an image display apparatus includes: a display element which displays an image; and an eyepiece optical system through which the image light from the display element is directed to a pupil of an observer. Here, the eyepiece optical system includes: an eyepiece prism which guides the image light inside it; and a volume-phase holographic optical element which diffraction-reflects the image light guided inside the eyepiece prism. The eyepiece prism has: two mutually parallel flat surfaces; and a bonding surface which connects together the two flat surfaces and to which the holographic optical element is bonded. The image light is totally reflected at least once on each of the two flat surfaces and is then incident on the holographic optical element. The bonding surface is in a shape having a curvature only in one direction, and has a curvature in a sectional plane that includes the normal to the display element and the normals to the two parallel flat surfaces and that also includes the center of the display surface of the display element. In the sectional plane, the diffraction directions at which the light emanating from the center of the display surface and the light emanating from at least one point other than the center are diffraction-reflected on the holographic optical element are directions that produce non-zero angle differences at the same side with respect to the regular reflection directions of the respective light on the bonding surface.

Preferably, the angle differences produced for the respective light in the sectional plane are produced at the side where the respective light are incident on the holographic optical element with respect to the regular reflection directions of the respective light on the bonding surface.

Preferably, the display element displays the image by modulating light from an illumination optical system.

Preferably, when the holographic optical element is replaced with air, the image light from the display element is not totally reflected on the bonding surface of the eyepiece prism but at least part of the image light is transmitted to the air side.

According to the embodiment, a head-mounted display includes: an image display apparatus as described above; and a support member which supports the image display apparatus in front of an eye of the observer.

**Industrial Applicability**

Image display apparatuses according to the present invention find applications in, for example, HMDs.

**List of Reference Signs**

1       image display apparatus

2  illumination optical system
5  display element
6  eyepiece optical system
21  eyepiece prism
21b  surface
21c  surface
21d  surface (bonding surface)
23  HOE (holographic optical element)
40  HMD (head-mounted display)
42  frame (support member)

**Claims**

1. An image display apparatus (1), including:

   a display element (5) which displays an image; and
   an eyepiece optical system (6) through which image light from the display element (5) is directed to a pupil of an observer,
   **characterized in that**
   the eyepiece optical system (6) includes:

   an eyepiece prism (21) which guides the image light inside the eyepiece prism (21); and
   a volume-phase holographic optical element (23) which diffraction-reflects the image light guided inside the eyepiece prism (21),

   the eyepiece prism (21) has:

   two mutually parallel flat surfaces (21b, 21c); and
   a bonding surface (21d) which connects together the two flat surfaces (21b, 21c) and to which the holographic optical element (23) is bonded,

   the image light is totally reflected at least once on each of the two flat surfaces (21b, 21c) and is then incident on the holographic optical element (23),
   the bonding surface (21d)
   is in a shape having a curvature only in one direction, and
   has a curvature in a sectional plane that includes a normal to the display element (5) and normals to the two parallel flat surfaces (21b, 21c) and that also includes a center of a display surface of the display element (5), and in the sectional plane, diffraction directions at which light emanating from the center of the display surface and light emanating from at least one point other than the center are diffraction-reflected on the holographic optical element (23) are directions that produce non-zero angle differences at a same side with respect to regular reflection directions of the respective light on the bonding surface (21d).

2. The image display apparatus (1) according to claim 1, wherein
   the angle differences produced for the respective light in the sectional plane are produced at a side where the respective light are incident on the holographic optical element (23) with respect to the regular reflection directions of the respective light on the bonding surface (21d).

3. The image display apparatus (1) according to claim 1 or 2, wherein
   the display element (5) displays the image by modulating light from an illumination optical system (2).

4. The image display apparatus (1) according to any one of claims 1 to 3, wherein
   when the holographic optical element (23) is replaced with air, the image light from the display element (5) is not totally reflected on the bonding surface (21d) of the eyepiece prism (21) but at least part of the image light is transmitted to an air side.

5. A head-mounted display (40), comprising:

an image display apparatus (1) according to any one of claims 1 to 4; and

a support member (42) which supports the image display apparatus (1) in front of an eye of the observer.

**Patentansprüche**

1. Bildanzeigevorrichtung (1), aufweisend:

ein Anzeigeelement (5), das ein Bild anzeigt; und
ein optisches Okularsystem (6), durch welches Bildlicht von dem Anzeigeelement (5) zu der Pupille eines Beobachters gelenkt wird,
**dadurch gekennzeichnet, dass**
das optische Okularsystem (6) aufweist:

ein Okularprisma (21), welches das Bildlicht innerhalb des Okularprismas (21) lenkt; und
ein holographisches optisches Volumenphasenelement (23), welches durch Beugung das innerhalb des Okularprismas (21) gelenkte Bildlicht reflektiert,

wobei das Okularprisma (21) aufweist:

zwei zueinander parallel angeordnete ebene Flächen (21b, 21c); und
eine Verbindungsfläche (21d), welche die beiden ebenen Flächen (21b, 21c) miteinander verbindet und mit welcher das holographische optische Element (23) verbunden ist,

wobei das Bildlicht zumindest einmal an jeder der beiden ebenen Flächen (21b, 21c) vollständig reflektiert wird und dann auf das holographische optische Element (23) auftrifft,
wobei die Verbindungsfläche (21d)
eine Form aufweist, die nur in eine Richtung gekrümmt ist, und
eine Krümmung in einer Schnittebene aufweist, die eine Normale zu dem Anzeigeelement (5) und Normalen zu den beiden ebenen Flächen (21b, 21c) aufweist, und die ebenfalls einen Mittelpunkt einer Anzeigefläche des Anzeigeelements (5) umfasst, und
wobei in der Schnittebene Beugungsrichtungen, in welchen von dem Mittelpunkt der Anzeigefläche ausgehendes Licht und von zumindest einem anderen Punkt als dem Mittelpunkt ausgehendes Licht an dem holographischen optischen Element (23) durch Beugung reflektiert werden, Richtungen sind, welche Nicht-Null Winkelunterschiede auf einer gleichen Seite gegenüber regulären Reflexionsrichtungen des jeweiligen Lichts an der Verbindungsfläche (21d) erzeugen.

2. Bildanzeigevorrichtung (1) gemäß Anspruch 1, wobei
die für das jeweilige Licht in der Schnittebene erzeugten Winkelunterschiede auf einer Seite erzeugt werden, wo das jeweilige Licht auf das holographische optische Element (21d) gegenüber den regulären Reflexionsrichtungen des jeweiligen Lichts an der Verbindungsfläche (21d) auftrifft.

3. Bildanzeigevorrichtung (1) gemäß Anspruch 1 oder 2, wobei
das Anzeigeelement (5) das Bild anhand von Modulierung von Licht von einem optischen Beleuchtungssystem (2) anzeigt.

4. Bildanzeigevorrichtung (1) gemäß irgendeinem der Ansprüche 1 bis 3, wobei wenn das holographische optische Element (23) durch Luft ersetzt wird, das Bildlicht von dem Anzeigeelement (5) nicht vollständig auf der Verbindungsfläche (21d) des Okularprismas (21) reflektiert wird, sondern zumindest ein Teil des Bildlichts auf eine Luftseite übertragen wird.

5. Am Kopf montierte Anzeige (40), aufweisend:

eine Bildanzeigevorrichtung (1) gemäß irgendeinem der Ansprüche 1 bis 4; und
ein Tragelement (42), das die Bildanzeigevorrichtung (1) vor einem Auge des Beobachters hält.

**EP 3 287 835 B1**

**Revendications**

1. Dispositif d'affichage d'images (1), comprenant :

 un élément d'affichage (5), qui affiche une image ; et
 un système d'oculaire optique (6), à travers lequel de la lumière d'image de l'élément d'affichage (5) est dirigée vers une pupille d'un observateur,
 **caractérisé en ce que**
 le système d'oculaire optique (6) comprend :

 un prisme d'oculaire (21), qui guide la lumière d'image à l'intérieur du prisme d'oculaire (21) ; et
 un élément optique holographique de phase de volume (23), qui réfléchit par diffraction la lumière d'image guidé à l'intérieur du prisme d'oculaire (21),

 le prisme d'oculaire (21) comprenant :

 deux surfaces plates (21b, 21c) parallèles l'une à l'autre ; et
 une surface de liaison (21d), qui relie les deux surfaces plates (21b, 21c) l'une à l'autre et à laquelle est relié l'élément optique holographique (23),

 dans lequel la lumière d'image est complètement réfléchie au moins une fois sur chacune des deux surfaces plates (21b, 21c) et elle est ensuite incidente sur l'élément optique holographique (23),
 dans lequel la surface de liaison (21d)
 a une forme de manière à avoir une courbure dans une seule direction, et
 a une courbure dans un plan de coupe, qui comprend une normale à l'élément d'affichage (5) et des normales aux deux surfaces plates parallèles (21b, 21c), et qui comprend aussi un point central de la surface d'affichage de l'élément d'affichage (5), et
 dans le plan de coupe, des directions de diffraction, dans lesquelles de la lumière émanant du point central de la surface d'affichage et de la lumière émanant d'au moins un point différent du point central sont réfléchies par diffraction, sont des directions, qui produisent des différences d'angle non-zéro sur un même côté par rapport à des directions de réflexion régulières de la lumière respective sur la surface de liaison (21d).

2. Dispositif d'affichage d'images (1) selon la revendication 1, dans lequel
 les différences d'angle produites pour la lumière respective dans le plan de coupe sont produites sur un côté, où la lumière respective est incidente sur l'élément optique holographique (23) par rapport aux directions de réflexion régulières de la lumière respective sur la surface de liaison (21d).

3. Dispositif d'affichage d'images (1) selon la revendication 1 ou la revendication 2, dans lequel
 l'élément d'affichage (5) affiche l'image en modulant de la lumière à partir d'un système d'illumination optique (2).

4. Dispositif d'affichage d'images (1) selon l'une quelconque des revendications 1 à 3, dans lequel
 si l'élément optique holographique est remplacé par l'air, la lumière d'image de l'élément d'affichage (5) n'est pas complètement réfléchie sur la surface de liaison (21d) du prisme d'oculaire (21), mais au moins une partie de la lumière d'image est transmise à un côté d'air.

5. Dispositif d'affichage (40) porté sur la tête, comprenant :

 un dispositif d'affichage d'images (1) selon l'une quelconque des revendications 1 à 4 ; et
 un élément de support (42), qui porte le dispositif d'affichage d'images (1) devant un oeil de l'observateur.

14

FIG.1

FIG.2

FIG.3

# FIG.4

FIG.5A

44(44R)    44(44L)

43(43R)    47R

47L

Y⊙ ——→X

↓Z

43(43L)

1a

1

45

42

40

FIG.5B

1

1a

Y

45

Z⊙ ——→X

42

43(43R)    6    44(44R)    44(44L)    43(43L)

40

FIG.5C

Z

1

45

6    1a    46R    46L

Y⊗ ——→X    42    40

47R    47L

43(43R)    44(44R)    44(44L)    43(43L)

FIG.6

# FIG.7

**PRACTICAL EXAMPLE – CURVATURE OF FIELD**

VERTICAL    HORIZONTAL

# FIG.8

**COMPARATIVE EXAMPLE – CURVATURE OF FIELD**

VERTICAL    HORIZONTAL

# FIG.9

COMA

PRACTICAL EXAMPLE    COMPARATIVE EXAMPLE

**EP 3 287 835 B1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2001264682 A